# EUROPEAN PATENT APPLICATION

(11) **EP 3 608 832 A1**
(43) Date of publication of application: **12.02.2020**
(21) Application number: 19188257.0
(22) Date of filing: 25.07.2019
(51) Int. Cl.: G06K 9/00

(54) **IMAGE DISPLAY APPARATUS, IMAGE DISPLAY METHOD, AND CARRIER MEANS**

(30) Priority: 06.08.2018 JP 2018147868
(71) Applicant: Ricoh Company Ltd., Ohta-ku Tokyo 143-8555 (JP)
(72) Inventor: MOTOHASHI, Naoki, Ohta-ku, Tokyo (JP)
(74) Representative: Watkin, Timothy Lawrence Harvey

(57) **Abstract**

An information processing apparatus (13) includes an acquisition unit (1102) to acquire a distance image; and a data generation unit (1103) to access the distance image to acquire distance information, and generate data based on the acquired distance information. The data generation unit (1103) is configured to access at least one pixel of the distance image to acquire distance information of the accessed at least one pixel, and set a parameter for determining a number of access to the distance image based on a distance indicated by the acquired distance information of the accessed at least one pixel, such that the number of access to the distance image increases as the distance increases, and the number of access to the distance image decreases as the distance decreases.

## Description

### BACKGROUND

### Technical Field

Embodiments of the present disclosure relate to an information processing apparatus, a system, a mobile object, an information processing method, and carrier means for causing a computer to execute the method.

### Background Art

The body structure of an automobile has been developed in view of safety, for example, to protect a pedestrian and a passenger when an automobile clashes the pedestrian. In recent years, however, the technology for detecting person and automobiles at high speed has been developed with the development of the information processing technology and the image processing technology. Using such a technology, automobiles have been already developed, which automatically brakes before clashing an object, thus preventing the clash. Further, in addition to the system that exhibits the safety performance, an adaptive cruise control (ACC) system has already been released as on-vehicle system. The ACC system serves to recognize a proceeding vehicle and automatically follow the recognized proceeding vehicle to reduce the load of the driver when driving.

To achieves such control, there is a need to accurately measure the distance from the own vehicle to an object ahead. In such a measurement, range finding is performed practically using millimeter-wave radars, light detection and ranging (LiDARs), or stereo cameras. Further, in order to put the automatic control of a car into practical use with the on-vehicle image recognition technology, there is a need to recognize an object being displayed on the screen based on the distance information measured by the above-mentioned device and to control each object. For example, it is assumed that how to control is changed depending on whether the detected object is a pedestrian or a vehicle.

For example, when a stereo camera is used for range finding, a disparity image (an example of a distance image) is generated based on the amount of difference (disparity) in a local area between images captured by left and right cameras, thus to measure the distance for each pixel of the image. In detecting an object using the disparity image, each pixel of the disparity image is voted on a map (V map: V-disparity map) in which a horizontal axis denotes disparity values (distance) and a vertical axis denotes y-coordinates of the disparity image, and a road-surface shape is estimated from the distribution shape on the map. Next, among the pixels in the disparity image, only the pixels present at positions higher than the estimated road surface are voted onto a map (U map: U-disparity map) in which the horizontal axis denotes the x-axis of the disparity image and the vertical axis denotes disparity values. Then, an area (disparity block) in which disparity values equivalent to each other are gathered at high density on the U-disparity map is detected as an object.

When an object is detected using the above-described method, it might take a lot of processing time to generate each map because there is a need to access a disparity image or another map to generate a map. In view of such a situation, the method of thinning out the disparity image before access is known (JP-2017-083326-A1).

With the method of JP-2017-083326-A1 for reducing the number of pixels to be accessed, the number of access to the pixels can be reduced, and thus the processing speed can be made faster. However, the reduction in the number of access to pixels might further reduce the detection accuracy of the road surface or an object (other vehicles, pedestrians, and road equipment) on the road surface. That is, there is a trade-off between processing speed and detection accuracy.

In view of the above, an information processing apparatus that is capable of controlling the trade-off relation between the processing speed and the detection accuracy, a system, an object, an information processing method, and carrier means for causing a computer system to carry out the information processing method.

### SUMMARY

In one aspect of this disclosure, there is provided information processing apparatus includes an acquisition unit to acquire a distance image; and a data generation unit to access the distance image to acquire distance information, and generate data based on the acquired distance information. The data generation unit is configured to access at least one pixel of the distance image to acquire distance information of the accessed at least one pixel, and set a parameter for determining a number of access to the distance image based on a distance indicated by the acquired distance information of the accessed at least one pixel, such that the number of access to the distance image increases as the distance increases, and the number of access to the distance image decreases as the distance decreases.

According to an embodiment of the present disclosure, the trade-off relation between processing speed and detection accuracy can be controlled.

### BRIEF DESCRIPTION OF THE DRAWINGS

The aforementioned and other aspects, features, and advantages of the present disclosure will be better understood by reference to the following detailed description when considered in connection with the accompanying drawings, wherein:
FIG. 1 is an illustration of an example vehicle provided with a device control system according to an embodiment of the present disclosure;
FIG. 2 is a block diagram of a hardware configuration of the device control system according to an embodiment of the present disclosure;
FIG. 3 is a block diagram of a hardware configuration of an imaging unit according to an embodiment of the present disclosure;
FIG. 4 is a block diagram of a functional configuration of the device control system according to an embodiment of the present disclosure;
FIG. 5 is an illustration of the relation between a disparity image and a V-map;
FIG. 6 is an illustration of the relation between a disparity image and a U-map;
FIG. 7 is an illustration for describing a reduction in the number of pixels to be accessed;
FIGs. 8A, 8B, and 8C (FIG. 8) are illustrations for describing a difference between an all-pixel voting method and a virtual voting method according to an embodiment of the present disclosure, used in the horizontal direction of a disparity image to generate a U-map;
FIGs. 9A, 9B, and 9C (FIG. 9) are illustrations for describing a difference between the all-pixel voting method and the virtual voting method according to the embodiment of the present disclosure, being applied in the vertical direction of a disparity image to generate a U-map;
FIGs. 10A, 10B, and 10C are illustrations for describing a comparison between the all-pixel voting method and the virtual voting method being applied in the vertical direction of a disparity image to generate a V-map;
FIG. 11 is a block diagram of an example functional configuration of a U-map generator;
FIG. 12 is a block diagram of an example functional configuration of a data generation unit;
FIG. 13 is a block diagram of an example functional configuration of a parameter setting unit;
FIG. 14 is an illustration of a first example disparity image for describing the relation between the distance to a detection target and a thinning width, according to an embodiment of the present disclosure;
FIG. 15 is an illustration of a first example disparity image for describing a method of setting the thinning width according to an embodiment of the present disclosure;
FIG. 16 is an illustration of a second example disparity image for describing the relation between the distance to a detection target and a thinning width, according to an embodiment of the present disclosure;
FIG. 17 is an illustration of a second example disparity image for describing a method of setting the thinning width according to an embodiment of the present disclosure;
FIG. 18 is a flowchart of an example operation of the U-map generator according to an embodiment of the present disclosure;
FIG. 19 is a block diagram of an example functional configuration of the data generation unit according to another embodiment of the present disclosure;
FIG. 20 is an illustration of an example disparity image for describing a method of correcting a disparity value of an access pixel of interest; and
FIG. 21 is a flowchart of an example operation of the U-map generator according to another embodiment of the present disclosure.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results. As used herein, the singular forms "a", "an", and "the" are intended to include the plural forms as well, unless the context clearly indicates otherwise.

Although the embodiments are described with technical limitations with reference to the attached drawings, such description is not intended to limit the scope of the disclosure and all of the components or elements described in the embodiments of this disclosure are not necessarily indispensable.

Embodiments of the present disclosure are described in detail with reference to the drawings. Like reference numerals designate identical or corresponding components throughout the several views and a description of same is omitted.

The embodiments of an image display device, a mobile object, an image display method, and a recording medium storing program code are described in in detail with reference to the drawings.

Hereinafter, a description is given of one or more embodiments of an information processing apparatus, a system, a mobile object, an information processing method, and a recording medium storing program to cause a computer system to carry out the information processing method, with reference to the drawings.

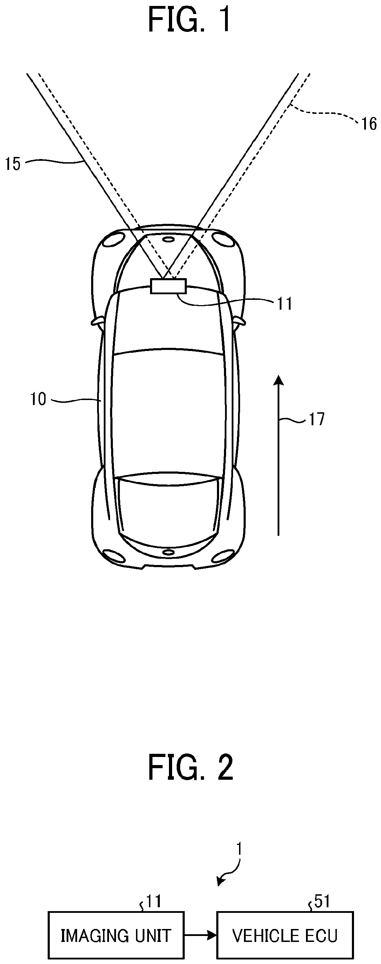

FIG. 1 is an illustration of an example vehicle 10 (an example of a mobile object) equipped with a device control system 1 (an example of a system) according to an embodiment of the present disclosure. The vehicle 10 according to the present embodiment is provided with an imaging unit 11 at the upper part of the windshield (near the rearview mirror) of the vehicle 10. The imaging unit 11 includes a stereo camera configured to capture an image of the scene ahead of the vehicle 10 in the direction 17 of travel, and an analysis unit (which corresponds to an image analysis unit to be described below, and is an example of an information processing apparatus) configured to analyze the image captured by the stereo camera. The stereo camera includes two camera sections horizontally arranged side by side, configured to capture an image of the left viewing field 15 and an image of the right viewing field 16. Hereinafter, capturing an image is also referred to as acquiring image data. The analysis unit is configured to analyze a recognition target object, such as a road surface on which the vehicle 10 is running, a preceding vehicle, a pedestrian, and an obstacle, based on the right and left images captured and supplied from the stereo camera. Further, the vehicle 10 is also equipped with the vehicle engine control unit (ECU) 51 as an example of a controller, configured to perform, for example, a control of various kinds of on-vehicle devices, steering control of the vehicle 10, and brake control, based on the analytical results of the analysis unit (the results of information processing of the information processing apparatus).

FIG. 2 is a block diagram of a hardware configuration of the device control system 1 according to an embodiment of the present disclosure. The device control system 1 includes the imaging unit 11 and the vehicle ECU 51. The vehicle ECU 51 is a unit including a circuit configured to generate a signal for controlling the traveling state of the vehicle 10. The vehicle ECU 51 includes a memory that stores program, a central processing unit (CPU) that performs predetermined calculation and control processing according to the program, and various kinds of logic circuits. The vehicle ECU 51 is configured to perform processing for controlling the vehicle 10, for example, automatically controlling a brake, an accelerator, and steering, and also perform processing for outputting a warning, based on the analysis result of the analysis unit included in the imaging unit 11.

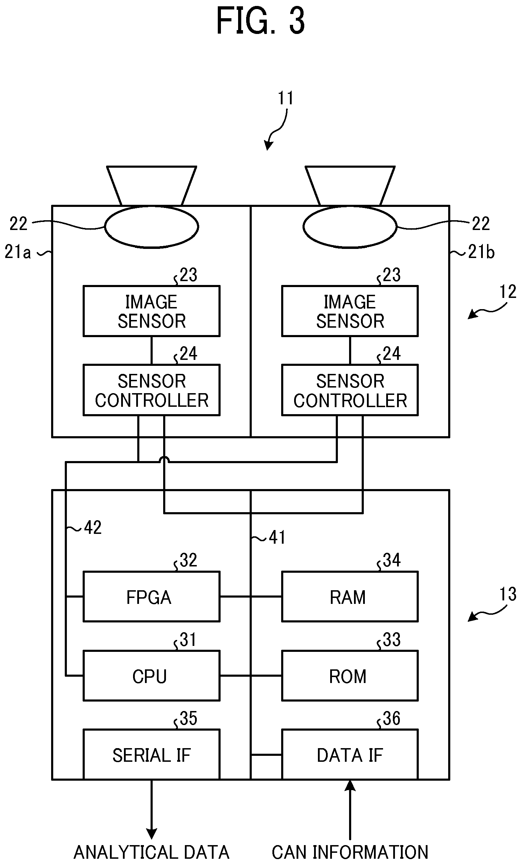

FIG. 3 is a block diagram of a hardware configuration of the imaging unit 11 according to an embodiment of the present disclosure. The imaging unit 11 according to the present embodiment includes a stereo camera 12 and an image analysis unit 13.

The stereo camera 12 includes a first camera section 21a for the left eye, and a second camera section 21b for the right eye, which are arranged in parallel. Each of the camera sections 21a and 21b includes a lens 22, an image sensor 23, and a sensor controller 24. Examples of the image sensor 23 includes a charge coupled device (CCD), or a complementary metal-oxide semiconductor (CMOS). The sensor controller 24 is a device including a circuit for performing exposure control of the image sensor 23, image reading control, communication with an external circuit, and transmission control of image data.

The image analysis unit 13 is an example of the information processing apparatus, and is configured to acquire a distance image having information regarding distance (distance information) for each pixel, and generate data based the acquired distance image. In the following description, the cases where a disparity image in which each pixel has a disparity value is an example of the distance image are described. However, no limitation is intended therein. Alternatively, an image in which each pixel has a distance measurement value obtained by a millimeter-wave radar or a light detection and ranging (LiDar) or an image in which each pixel has a combination of the disparity value and the distance measurement value may be used as a distance image. Further, in the following, a description is given of an example in which data generated based on a distance image is a V-map and a U-map (to be described later in detail). However, the present disclosure is not limited to the example. The function of the image analysis unit 13 is described later in detail.

The hardware configuration of the image analysis unit 13 is described below. As illustrated in FIG. 3, the image analysis unit 13 includes a CPU 31, a field-programmable gate array (FPGA) 32, a read only memory (ROM) 33, a random access memory (RAM) 34, a serial interface (IF) 35, a data IF 36, a data bus line 41, and a serial bus line 42.

The stereo camera 12 is connected to the image analysis unit 13 via the data bus line 41 and the serial bus line 42. The CPU 31 executes the entire operation of the image analysis unit 13, image processing, and image recognition processing according to the program stored in the ROM 33. The luminance data (a luminance image in which a luminance value is set for each pixel) acquired by the image sensors 23 of the camera sections 21a and 21b is written in the RAM 34 of the image analysis unit 13 via the data bus line 41. The control data for changing the exposure value of a sensor, the control data for changing the image reading parameter, various kinds of setting data, or the like are transmitted and received between the CPU 31 or the FPGA 32 and the sensor controller 24 through the serial bus line 42.

The FPGA 32 executes processing that needs to be done in real time on the data stored in the RAM 34. The processing that needs to be done in real time on the data is, for example, gamma correction, distortion correction (collimation of images on the right and left), disparity computation using block matching, to generate, from the luminance image, a disparity image in which a disparity value is set for each pixel. The generated disparity image is then rewritten in the RAM 34.

The CPU 31 controls each one of the sensor controllers 24 of the stereo camera 12, and controls the entirety of the image analysis unit 13. The ROM 33 stores a program that causes the CPU 31 or the FPGA 32 to execute various processes. The CPU 31 acquires, for example, controller area network (CAN) information (vehicle speed, acceleration, steering angle, yaw rate, etc.) of the vehicle 10 as a parameter via the data IF 36. Then, the CPU 31 performs various kinds of processes, such as a process of estimating road-surface shape, a process of recognizing objects, and a process of measuring distances, using the luminance image and disparity image stored in the RAM 34, according to the program stored in the ROM 33.

The analysis data indicating the analytical results of the image analysis unit 13 is transmitted to an external system, such as an automatic brake system, an automatic speed control system, an automatic steering system, and an alarm system, via the serial IF 35.

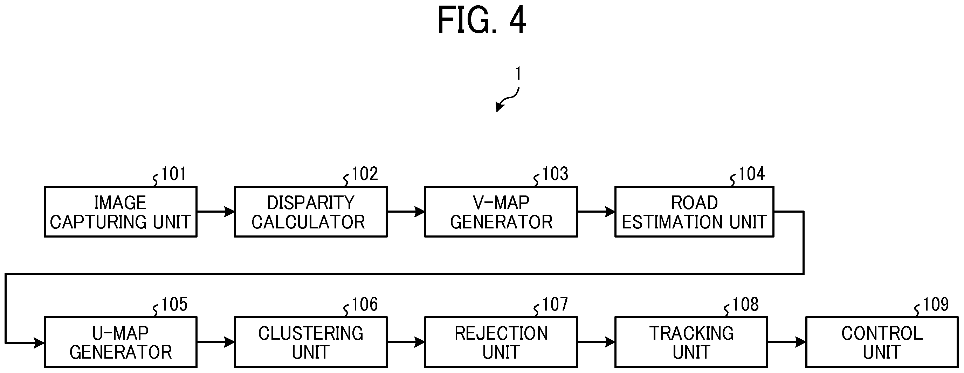

FIG. 4 is a block diagram of a functional configuration of the device control system 1 according to an embodiment of the present disclosure. The device control system 1 according to an embodiment of the present disclosure includes an image capturing unit 101, a disparity calculator 102, a V-map generator 103, a road estimation unit 104, a U-map generator 105, a clustering unit 106, a rejection unit 107, a tracking unit 108, and a control unit 109. FIG. 4 is an example of a series of processes including a process of capturing one frame by the imaging unit 11, a process of performing an image analytical processing, such as road-surface estimation and object recognition, and a process of starting controlling a vehicle.

The image capturing unit 101 is a function unit that captures an image of an area ahead of the vehicle 10, and obtains two luminance images (captured images). The image capturing unit 101 is configured of, for example, an imaging unit 11. One of the two luminance images captured by the image capturing unit 101 (the luminance image of the left viewing field 15 captured by, for example, the first camera section 21a) is designated as a reference image. The other image (the luminance image of the right viewing field 16 captured by, for example, the second camera section 21b) is designated as a comparison image.

The disparity calculator 102 calculates a disparity value for each pixel by performing, for example, block matching of a local area within the capturing area of the stereo camera 12, using the luminance image as the reference image and the luminance image as the comparison image, so as to generate a disparity image. The disparity calculator 102 is configured of, for example, the FPGA 32 and the CPU 31.

The V-map generator 103 generates a V-map to be used by the road estimation unit 104 following the V-map generator 103, by using the disparity image generated by the disparity calculator 102. The V-map as an example of a first map is a map indicating the relation between the position in the vertical direction of the disparity image (an example of the distance image) and the disparity value d (an example of the distance information). More specifically, the V-map is a two-dimensional map in which the disparity values d of the vertical axis correspond to the y-coordinates of a disparity image in the vertical axis. The V-map is generated by voting a disparity value d for each set of coordinates (x, y) of a disparity image, on the corresponding position (d, y)on the V-map. In each set of the coordinates (d, y) on the V map, a value (a frequency value) indicating the frequency (score) of the disparity value d voted on the corresponding position is stored.

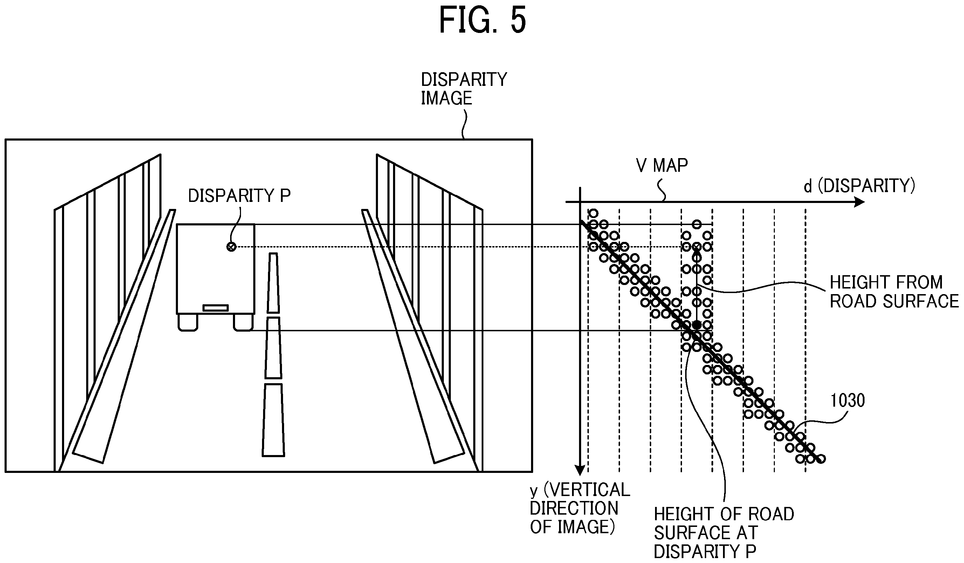

FIG. 5 is an illustration of the relation between a disparity image and the V-map. As illustrated in FIG. 5, a disparity voted on one line (a horizontal line) along the horizontal direction of the V-map corresponds to a disparity extracted from one line along a given horizontal direction of the disparity image.

In the example of FIG. 5, the y-coordinate values of the disparity image are equal to the y-coordinate values of the V-map. However, the y-coordinate values may be different from the y-coordinate values of the V-map. Based on this relation of FIG. 5, the pixels of the object in the disparity image are present at the same distance from the vehicle. Accordingly, the pixels of the object are distributed in the vertical direction for each equivalent disparity value d of the horizontal axis on the V-map.

Further, the disparity value d increases as the distance from the vehicle decreases, and decreases as the distance from the vehicle increases. Accordingly, in the case of the V-map of FIG. 5 in which the origin is at the upper left, the pixels (the disparity values d) of the disparity image are voted on the V-map to form a distribution shape extending downward to the right from the origin.

The road estimation unit 104 following the V-map generator 103 estimates a road-surface shape using the V-map generated by the V-map generator 103. Then, the road estimation unit 104 determines the y-coordinate value of the height of the road surface (the road-surface height) at a disparity value d. FIG. 5 indicates the estimated road-surface shape 1030 on the V-map.

Note that the relation of the disparity P and the height of the preceding vehicle from the road surface is as illustrated in FIG. 5. As can be seen from the relation in FIG. 5, the difference in the y-coordinate value (the difference between the y-coordinate value of the preceding vehicle at the disparity P and the y-coordinate value of the road surface at the disparity P) corresponds to the height from the road surface.

In an embodiment of the present disclosure, the V-map generator 103 sequentially accesses a plurality of pixels while thinning-out the disparity image (an example of the distance image), and determines a disparity value d of a non-access pixel indicating a pixel not to be accessed based on a disparity value d of an access pixel indicating a pixel to be accessed. Using the determined disparity value d, the V-map generator 103 generates a V-map (an example of data generated based on the distance image).

Detailed description of generation of the V-map is given later. The function of the V-map generator 103 is implemented by the CPU 31 executing the program. Alternatively, the function may be implemented by dedicated hardware circuitry, such as the FPGA 32.

As described above, the road estimation unit 104 estimates a road-surface shape based on the V-map generated by the V-map generator 103. The method of generating the V map is described later. The road estimation unit 104 is configured of, for example, the CPU 31 and the FPGA 32.

The U-map generator 105 generates a U-map to be used by the clustering unit 106 following the U-map generator 105, using the disparity image generated by the disparity calculator 102 and the estimated road-surface shape (the estimation results of the road estimation unit 104). The U-map as an example of the second map is a map indicating the relation between the position in in the horizontal direction of the disparity image (an example of the distance image) and the disparity value d (distance) of a pixel at a position higher than the height of the road surface.

More specifically, the U-map is a two-dimensional map in which the disparity values d of the vertical axis correspond to the x-coordinates of a disparity image in the vertical axis. The U-map is generated by voting the disparity values d of pixels at positions exceeding (higher than) the height of the road surface on the corresponding positions (x, d) in the U-map, out of the disparity values d at the coordinates (x, y) of the disparity image. In each set of the coordinates (x, d) on the U-map, a value (a frequency value) indicating the frequency (score) of the disparity value d voted on the corresponding position is stored.

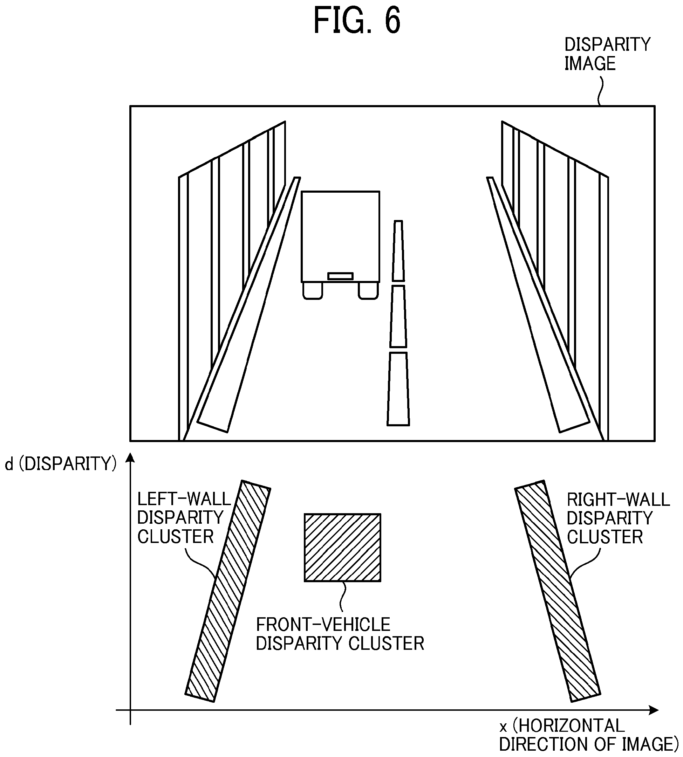

FIG. 6 is an illustration of the relation between the disparity image and the U-map. On the U-map, only pixels having disparity higher than that of the road surface are voted. In the example of FIG. 6, it is assumed that the horizontal axis of the disparity image corresponds to the horizontal axis of the U-map.

Note that the horizontal axis of the U-map may be expressed by the actual distance into which the coordinate values of the horizontal direction of the disparity image are converted. Alternatively, the actual height from the road surface, instead of the frequency value, may be stored in each set of coordinates on the U-map. Further, any kind of U-map may be used. In the example of FIG. 6, the horizontal axis is made to correspond to the x-coordinates of the disparity image, and each set of coordinates stores the frequency value. The processing of detecting a disparity block on the U-map corresponds to object detection. In the example of FIG. 6, the two side walls and the preceding vehicle are detected as objects.

In an embodiment of the present disclosure, the U-map generator 105 sequentially accesses a plurality of pixels while thinning-out pixels of the disparity image, and determines a disparity value d of a non-access pixel indicating a pixel not to be accessed based on a disparity value d of a pixel to be accessed. Using the determined disparity value d, the U-map generator 105 generates a U-map.

The generation of the U-map is described in detail below. The function of the U-map generator 105 is implemented by the CPU 31 executing the program. Alternatively, the function may be implemented by dedicated hardware circuitry, such as the FPGA 32.

In the following description, when the V-map and the U-map are collectively referred to as a disparity map when there is no need to distinguish between the V-map and the U-map. The disparity map is an example of data based on a distance image (in this example, a disparity image).

Referring to FIG. 4, the clustering unit 106 detects, as a new object, an area in which disparity values whose frequency values are more than a predetermined value are densely collected on the U-map generated by the U-map generator 105, and identifies the type of object (person, vehicle, guardrail, etc.) based on the coordinates on the luminance image of the detected area. Thus, the clustering unit 106 gives individual information indicating the identified type to the object. The clustering unit 106 is configured of, for example, the CPU 31 and the FPGA 32.

The rejection unit 107 is a functional unit that rejects an object not to be recognized (non-recognition target) (not a target for collision avoidance), using, for example, the frame information (for example, a luminance image and a disparity image), the U-map, and the individual information of a new object. The rejection unit 107 is configured of, for example, the CPU 31 and the FPGA 32.

The tracking unit 108 is a functional unit that determines whether the detected object is an object to be tracked (a tracking target) when the detected object (an object that has not been rejected) appears in a plurality of frames. When the detected object (an object which has not been rejected) appears continuously in a plurality of frames. When determining that the detected object is the tracking target, the tracking unit 108 generates individual information indicating the tracking target. The tracking unit 108 is configured of, for example, the CPU 31 and the FPGA 32.

The control unit 109 is a functional unit that controls the vehicle 10 (for collision avoidance action, output of a warning, and the like) based on the results obtained by the above process. The control unit 109 is configured of, for example, a vehicle ECU 51.

Next, a method of generating the disparity map is described in detail. In generating the disparity map, each of the V-map generator 103 and the U-map generator 105 sequentially accesses each of a plurality of pixels while thinning-out pixels of the disparity image. Each of the V-map generator 103 and the U-map generator 105 sets the disparity value d of a pixel not to be accessed (a non-access pixel) positioned between a first access pixel (a first pixel to be accessed) and a second access pixel (a second pixel to be accessed after the first access pixel), to the same value as the disparity value d of the first access pixel, and votes the set disparity value d on the disparity map to be generated. In the following, a method of determining (estimating) the disparity value d of the non-access pixel based on the disparity value d of the access pixel and voting the determined value is sometimes referred to as a virtual voting method.

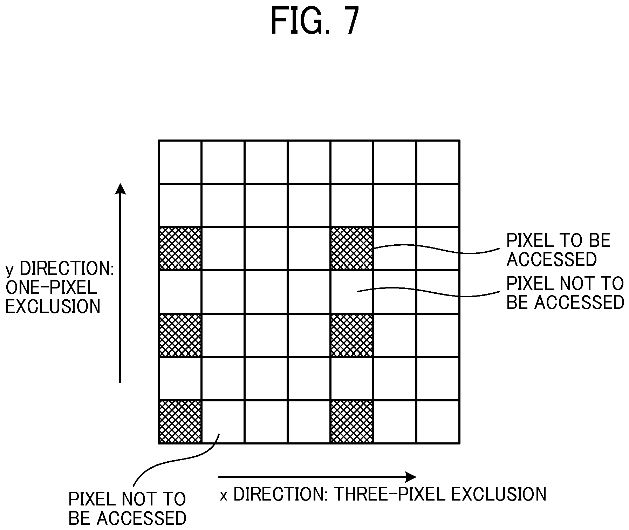

FIG. 7 is an illustration for describing a reduction in the number of pixels to be accessed. For example, when a thinning width (width for pixel exclusion) is three in the x-direction and one in the y-direction, the number of non-access pixels between access pixels is three in the x-direction and one in the y-direction. In this case, the non-access pixel that has been thinned out (excluded from the access target of the disparity image) is defined as a pixel for thinning-out (a thinned pixel or an excluded pixel). Hereinafter, a pixel (an access target pixel/access target) not to be excluded from the access target of the disparity pixels is also referred to as an access pixel, and a pixel (a non-access pixel) to be excluded or that has been excluded from the access target of the disparity pixels is also referred to as a thinned pixel (excluded pixel).

By contrast, a method of accessing all of the pixels of the disparity image and voting the disparity values of all of the pixels is referred to as an all-pixel voting method. The thinning-out processing takes a longer time in the all-pixel voting method than the virtual voting method or a simple thinning-out method to be described later does. However, any piece of information is not absent in the all-pixel voting method. Further, a method of voting not the thinned pixels (non-access pixels) but only the access pixels on the disparity map to be generated is referred to as a simple thinning-out method. The thinning-out processing takes a shorter time in the simple thinning-out method than the virtual voting method or the all-pixel voting method does. However, some pieces of information are absent, and thus detection accuracy decreases in the simple thinning-out method.

The virtual voting method according to an embodiment of the present disclosure also excludes one or more pixels from the pixels of the disparity image (performs thinning-out) at a predetermined thinning width to generate a disparity map. In this virtual voting method, however, the disparity value d of the excluded pixel (non-access pixel) is estimated (determined) based on the disparity value d of the access pixel, and the access pixel and the non-access pixel are voted together on a disparity map to be generated. Accordingly, the number of access to the disparity image can be reduced, and the scores of valid disparities can be increased. Thus, the processing time can be shortened, and the reduction in the detection accuracy of an object can be prevented.

In this virtual voting method, it is assumed that a pixel of interest and pixels surrounding the pixel of interest are likely to have pixel values close to each other in a disparity image (a distance image) because the pixel of interest and the pixels surrounding the pixel of interest are likely to belong to the same subject. In the case of a luminance image for example, the pixels surrounding the pixel of interest might correspond to the boundary of a pattern of a subject and have significantly different pixel values than the pixel of interest does, depending on the texture of the subject.

However, in the case of the disparity image (distance image), the pixels of the same object are more likely to be present at an equal distance irrespective of the texture of the object, which makes it easier to satisfy the above-described assumption. Under this assumption, in generating a disparity map based on a disparity image, for example, a pixel on the right of the pixel of interest can be presumed to have the same pixel value and can be voted on a disparity map to be generated, without an actual access to the pixel on the right of the pixel of interest. In even such a case, a substantially equivalent disparity value d can be voted on the disparity map even if there is a slight difference in disparity value between the pixels. The same applies to vertical and diagonal directions as in the horizontal direction.

In other words, the virtual voting method is based on the assumption that the pixel of interest and a pixel closer to the pixel of interest are likely to have disparity values d close to each other. Based on such an assumption, a disparity value d of a non-access pixel (a thinned pixel) close to an access pixel (a pixel of interest) is determined (estimated) based on the disparity value d of the access pixel, and both the access pixel and the non-access pixel are voted on a map. With this configuration, the processing time can be shortened, and the score of effective voted disparities can be increased.

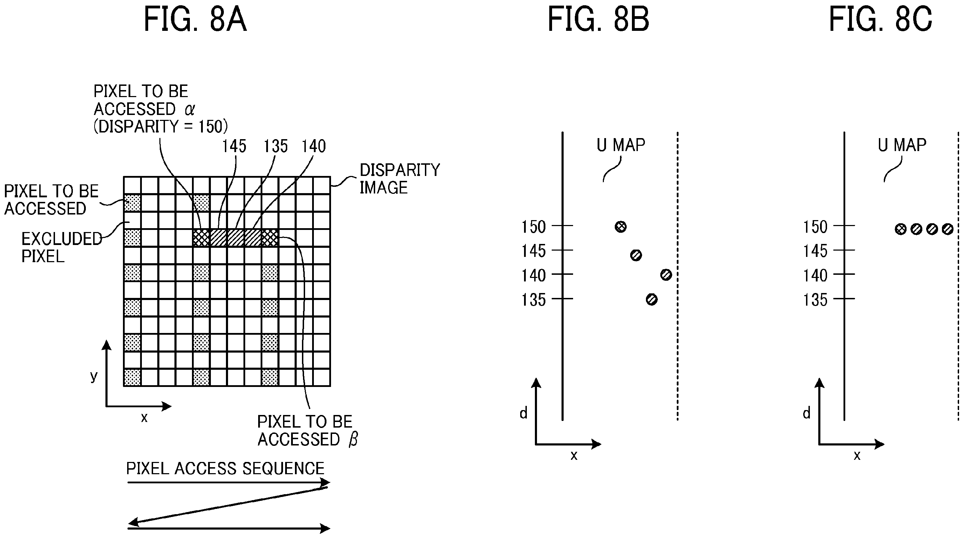

Hereinafter, the virtual voting method according to an embodiment of the present disclosure is described, using an example of the U-map. FIGs. 8A, 8B, and 8C (FIG. 8) are illustrations for describing a difference between the all-pixel voting method and the virtual voting method according to an embodiment of the present disclosure, used in the horizontal direction of the U-map. As illustrated in FIG. 8A, a pixel of interest is designated as an access pixel α (pixel to be accessed α), and voting of pixels up to another access pixel β (pixel to be accessed β) to be subsequently accessed after the pixel of interest is considered.

In this example, the access pixels are accessed in order from a pixel at the upper left to the right. When the processing in one line is completed, the process proceeds to the lower line, and the access pixels are sequentially accessed in a direction from the upper left to the right. However, the access pixels may be accessed in a different order. For example, the line of interest may be changed from the bottom to the top.

In the example of FIG. 8A, it is assumed that the disparity value d of the access pixel α is 150, and the disparity value d of a non-access pixel (thinned pixel) on the right of the access pixel α is 145. Further, it is also assumed that the disparity value d of another non-access pixel on the right of the non-access pixel is 140, and the disparity value d of a still another non-access pixel on the right of said another non-access pixel is 135.

In the all-pixel voting method, three thinned pixels (non-access pixels) present between the access pixel α and the access pixel β are actually accessed and voted on a U-map. In this case, the U map after the voting is as illustrated in FIG. 8B.

By contrast, in the virtual voting method according to the present embodiment, as the above-described three thinned pixels (non-access pixels) are close to the pixel of interest (the access pixel α), the three thinned pixels are assumed (estimated) to have the same pixel value (disparity value d) as that of the access pixel α, and are voted on the respective positions of the U-map.

The U-map after voting is as illustrated in FIG. 8C. Although there is an error compared to the case of FIG. 8B, a substantially equivalent disparity value d can be voted on the U-map.

Accordingly, the virtual voting method according to the present embodiment enables disparity values assumed to be effective to be determined and voted on the U-map without accessing to pixels to be thinned out. This configuration can increase the score of valid disparities on the U-map, and thus increases the detection accuracy.

In this example, all of the three pixels between the access pixel α of interest and the second access pixel β are virtually voted on the U-map. Alternatively, for example, less than three non-access pixels (thinned pixels) may be virtually voted on the U-map. For example, assuming that when the thinning width is large, all of the thinned pixels are virtually voted on the U-map, many pixels voted on the U-map might have an estimated disparity value d (a disparity values d that is likely to be different from an actual value). This might adversely affect the detection accuracy.

That is, it is satisfactory as long as the virtual voting method according to an embodiment of the present disclosure determines the disparity value d (an example of distance information) of one or more non-access pixels (thinned pixels) between the first access pixel (the access pixel α in this example) and the second access pixel (the access pixel β in this example) to be accessed after the first access pixel, to be the same value as the disparity value d of the first access pixel.

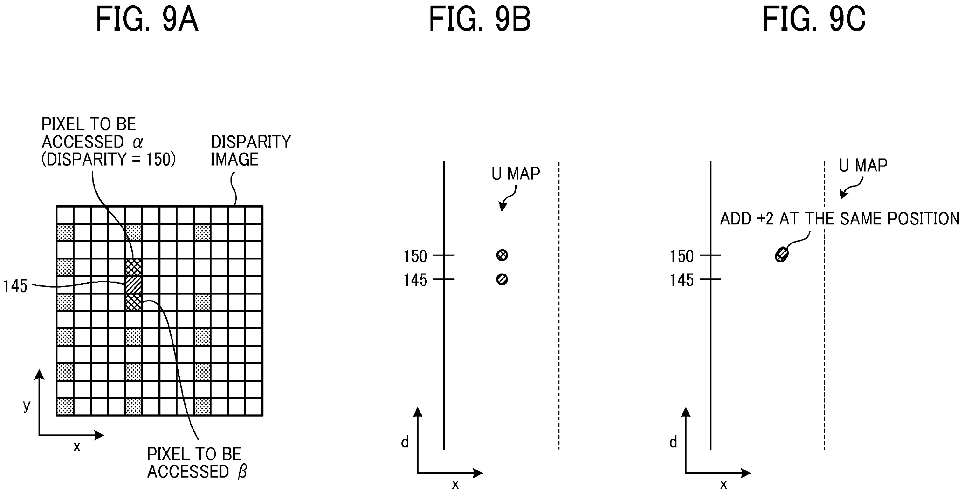

As illustrated in FIGs. 9A, 9B, and 9C, the same processing can be applied to the vertical direction, in addition to the horizontal direction. When the virtual voting method is applied in the vertical direction of the disparity image to generate the U-map, the pixels to be processed are voted on the same coordinates on the U-map because the pixels are arranged along the vertical direction in the disparity image, and their x-coordinate values are the same along the vertical direction (see FIG. 9C).

Note that an access pixel of interest may be determined whether its disparity value d is valid before determining whether the access pixel of interest is to be virtually voted on the U-map based on its disparity value d. For example, there are cases in which it is impossible to calculate disparity of a pixel (block matching of right-and-left images is unable to be performed to obtain disparity) when it is at nighttime or the subject is black.

In view of such cases, when the disparity value d of the access pixel of interest is outside a valid disparity range that is prepared beforehand, the access pixel of interest may be determined to be invalid. In this case, the access pixel of interest and a non-access pixel between the access pixel of interest and the second access pixel are not to be voted on the U-map. That is, the access pixel of interest and the non-access pixel are excluded from a virtual voting target (pixels to be virtually voted on the U-map).

Such a configuration can reduce unnecessary time for a process to be done due to the invalid pixel being virtually voted on the U-map.

However, the present disclosure is not limited to this configuration, and the invalid pixels may be processed. This is because, if branch processing is performed as in the determination process, there is a possibility that the processing time may be increased due to the collective processing of the circuit such as the FPGA 32. In view of such a situation, it might be sometimes more favorable that the access pixel of interest and the non-access pixel between the access pixel of interest and the second access pixel are virtually voted on the U-map irrespective of whether the access pixel of interest is valid or not, without any branch processing.

In the above-described configuration, whether the pixel of interest is valid is determined based on the relation between the disparity value d of the access pixel of interest and a predetermined valid disparity range. However, the present disclosure is not limited to the configuration. For example, if the disparity value d of an access pixel of interest indicates a value outside a predetermined range of the height from the road surface (for example, disparity indicating too high from the road surface), the access pixel of interest may be determined to be invalid.

That is, any desired determination reference may be set for the access pixel of interest. In short, the conditions for determining that the access pixel is valid may include that the disparity value d (distance information) of the access pixel is within a predetermined range, or that the disparity value d (distance information) of the access pixel indicates the height from the road surface within a predetermined range.

Further, any of the virtual voting method, the all-pixel voting method, and the simple thinning method may be selected for each line in the disparity image. For example, the all-pixel voting method may be selected (adopted) for the central area and an area around the central area of the disparity image where the preceding vehicle is likely to be reflected in. The virtual voting method may be selected for upper and lower areas of the disparity image, and the simple thinning method may be selected for areas whose significance is low (a detection target is less likely to be reflected in the disparity image).

Such a selection of method may be performed by combining the references for selecting the method based on the trade-off relation of the processing time and the detection accuracy so as to obtain a desired result. For example, it is possible to divide the image into horizontally long areas of a predetermined vertical width, and determine a voting method for each area and a thinning width in each of the x-direction and the y-direction (for example, when a disparity image has a size of 2,000 (horizontal direction) × 1,000 (vertical direction), the length in the vertical direction is divided into five area, and an area of 2,000 × 200 is defined as one area).

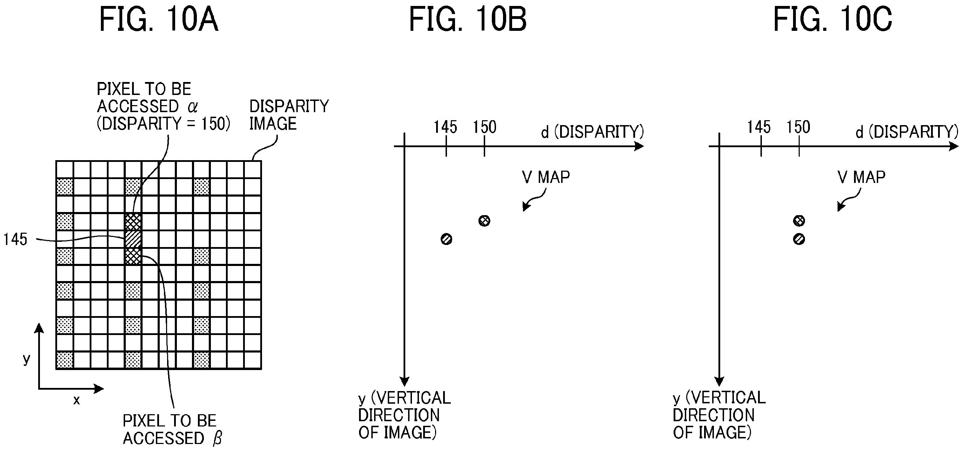

In the above description, the cases in which the virtual voting method is used to generate the U-map are described. However, no limitation is intended thereby. For example, a V-map can be generated using the above-described virtual voting method. FIGs. 10A, 10B, and 10C are illustrations for describing a comparison between the all-pixel voting method and the virtual voting method being applied in the vertical direction of a disparity image to generate the V-map. As the V-map and the U-map differ in that the coordinates of the disparity value d are merely reversed in the vertical and horizontal directions, the virtual voting method may be performed in the same manner as described above. The virtual voting method may be applied in the horizontal direction of the V-map in the same procedure as in the horizontal direction of the U-map.

As described above, the number of access to pixels in generating a disparity map is variable according to the thinning width and the voting method (the all-pixel voting method, the simple thinning method, and the virtual voting method). That is, if the thinning width is increased, the number of access decreases, and the processing speed is increased. However, the amount of distance information (the disparity value d) to be voted decreases, and accordingly, the accuracy of the disparity map decreases.

On the other hand, if the thinning width is reduced, the distance information to be voted increases, and the accuracy of the disparity map increases. However, the number of access to pixels increases, and the processing speed decreases. In addition, adopting (selecting) the all-pixel voting method increases the amount of the distance information to be voted and improves the accuracy of the disparity map, but increases the number of access and reduces the processing speed. When the simple thinning method is adopted, the processing speed and the accuracy of the disparity map change with the thinning width as described above. When the virtual voting method is adopted, the accuracy can be maintained high to some extent while reducing an increase in the number of access (a decrease in the processing speed), but the accuracy is lower than the all-pixel voting method does, and the processing speed is slower than the simple thinning method does.

As described above, there is a trade-off between processing speed and detection accuracy in generating the disparity map. By setting the access number parameter (in an embodiment, the thinning width and the voting method), which is a parameter to change the number of access to the pixels in generating a disparity map, the tradeoff between processing speed and the detection accuracy can be controlled. The device control system 1 (an image analysis unit 13) according to the present embodiment is configured to dynamically optimize the trade-off between the processing speed and the detection accuracy by adjusting the access number parameter according to the situation.

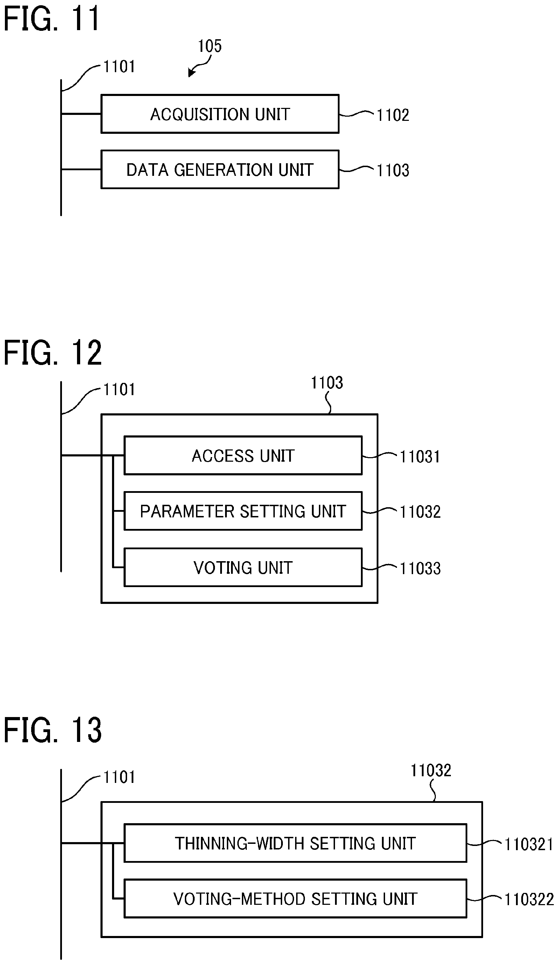

FIG. 11 is a block diagram of an example functional configuration of a U-map generator 105. The same functional configuration as that of the U-map generator 105 applies to the V-map generator 103. As illustrated in FIG. 11, the U-map generator 105 includes an acquisition unit 1102 and a data generation unit 1103. The acquisition unit 1102 acquires disparity images.

In this example, the disparity image generated by the disparity calculator 102 is transmitted to the U-map generator 105 via the network bus 1101. The acquisition unit 1102 acquires the disparity image transmitted to the U-map generator 105.

The data generation unit 1103 generates a U-map (an example of data) based on the disparity image acquired by the acquisition unit 1102. The data generation unit 1103 generates a U-map based on the disparity image acquired by the acquisition unit 1102, using the access number parameter set by a parameter setting unit 11032 to be described below.

FIG. 12 is a block diagram of an example functional configuration of the data generation unit 1103. The data generation unit 1103 according to the present embodiment includes an access unit 11031, a parameter setting unit 11032, and a voting unit 11033.

The access unit 11031 accesses a pixel of the disparity image acquired by the acquisition unit 1102 and acquires the disparity value d of the pixel accessed by the access unit 11031. The access unit 11031 according to an embodiment determines a pixel (access pixel) to be accessed based on the access number parameter (thinning width) set by the parameter setting unit 11032.

The parameter setting unit 11032 sets an access number parameter (a thinning width and a voting method in the present embodiment) based on the disparity value d (distance information of access pixels) acquired by the access unit 11031. The method of setting the access number parameter is be described later.

The voting unit 11033 votes the disparity value d acquired by the access unit 11031 on a U-map, based on the access number parameter (any of the all-pixel voting method, the simple thinning method, and the virtual voting method in the present embodiment) based on the access number parameter set by the parameter setting unit 11032.

FIG. 13 is a block diagram of an example functional configuration of a parameter setting unit 11032. The parameter setting unit 11032 according to the present embodiment includes a thinning-width setting unit 110321 and a voting-method setting unit 110322.

The thinning-width setting unit 110321 sets a thinning width (the number of non-access pixels disposed between the adjacent two access pixels) based on the disparity value d of the access pixel (accessed by access unit 11031). As described above, the thinning width is an example of the access number parameter. The thinning-width setting unit 110321 according to the present embodiment reduces the thinning width as the disparity value d decreases (the distance to the object is longer), and increases the thinning width as the disparity value d is larger (the distance to the object is shorter).

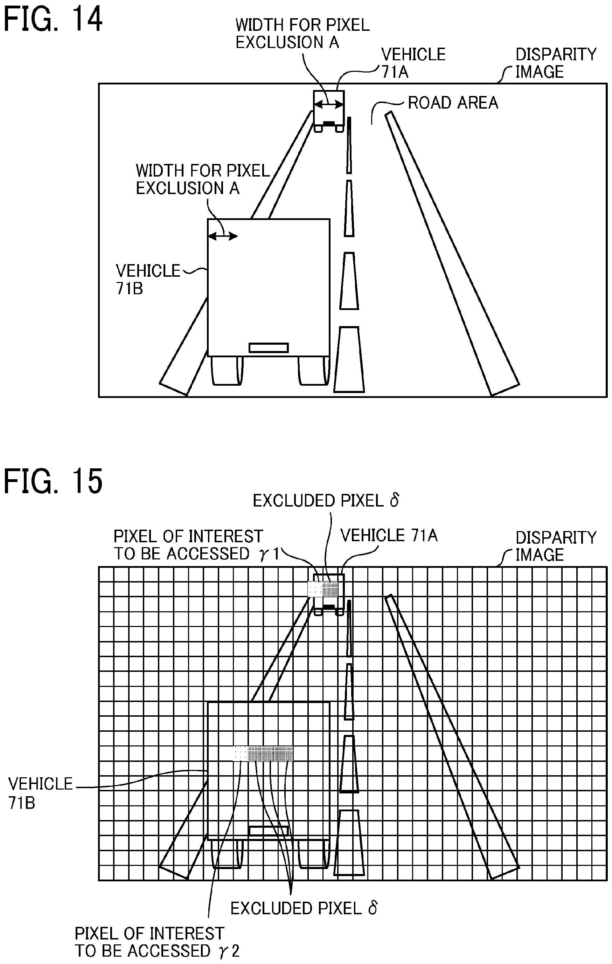

FIG. 14 is an illustration of a first example disparity image for describing the relation between the distance to a detection target and a thinning width, according to an embodiment of the present disclosure. A road-surface area and an object area, which are at a long distance from the vehicle, occupy a small area of the disparity image. In such a case, when the pixels are accessed with a wide thinning width (width for pixel exclusion) A in the disparity image, the access to pixels corresponding to the detection target, such as a road surface and an object, is more likely to result in failure.

Accordingly, the number of votes of the disparity value d in generating a disparity map decreases, which might hamper an accurate estimation of a road-surface shape and a clustering of the disparity values. This might hamper a detection of an object.

In FIG. 14, the area occupied by the vehicle 71A/71B in the disparity image differs with the distance from the vehicle. In this case, the vehicle 71A and the vehicle 71B are the same vehicle. The image of the vehicle 71A at a long distance is positioned at the upper portion of the disparity image, and the image of the vehicle 71B at a short distance is positioned at the lower portion of the disparity image. The size of the area occupied by the vehicle 71A at a long distance in the disparity image is smaller than the vehicle 71B at a short distance does.

When the pixels are accessed with the same thinning width A in the disparity image, the ratio of the thinning width A to a width (in the horizontal direction) of the vehicle 71A (at a long distance) along one line is greater than the ratio of the thinning width A to a width of the vehicle 71B along the scanning line. In the example of FIG. 14, the thinning width A is substantially equal to the width of the vehicle 71A. In such a case, if a mishit of an access pixel (a valid disparity value d cannot be obtained for some reasons) occurs, the access to the pixels corresponding to the vehicle 71A is more likely to result in failure, which hampers the detection of the vehicle A. By contrast, even if such a mishit occurs in detecting the vehicle 71B at a short distance, the disparity value d of the pixels corresponding to the vehicle 71B is more likely to be successfully obtained based on other access pixels, and the failure of the detection of the vehicle 71B is less likely to occur. Further, if the thinning width A is reduced, the vehicle 71A at a long distance is more likely to be successfully detected, but the number of access increases, and the processing speed decreases. In view of such circumstances, the configuration according to an embodiment of the present disclosure adjusts the thinning width A according to the distance to the detection target, such as a road surface and an object.

FIG. 15 is an illustration of a first example disparity image for describing a method of setting the thinning width according to an embodiment of the present disclosure. The thinning-width setting unit 110321 sets the thinning width, i.e., the number of thinned (excluded) pixels 8 (non-access pixels) sequentially arranged along the scanning direction (a direction from left to right in the example of FIG. 15) based on the disparity value d of the access pixel of interest γ1/γ2.

The access pixels γ1 and γ2 are pixels selected from a plurality of access pixels. All of the access pixels may be access pixel of interest, or only the access pixels satisfying the predetermined conditions may be the access pixel of interest.

In the example of FIG. 15, the thinning width for the vehicle 71A (at a long distance) in the upper area of the disparity image is set to "1" based on the disparity value d1 of the access pixel γ1 of interest at a long distance, and the thinning width for the vehicle 71B (at a short distance) in the lower area of the disparity image is set to "3" based on the disparity value d2 of the access pixel of interest γ2 at a short distance. In this case, the relation that d1 is less than d2 (d1 < d2).

That is, the thinning width decreases as the disparity value d decreases (the distance to the object increases), and the thinning width increases as the disparity value d increases (the distance to the object decreases). When the disparity value d is less than the threshold value, the thinning width may be set to 0. That is, the thinning width is set to any desired value according to the trade-off relation of the processing speed and the detection accuracy.

This configuration enables the thinning width to be dynamically optimized according to the disparity value of the access pixel of interest. In other words, the number of accesses to the pixels of the disparity image of a road surface or an object at a long distance is increased so as to increase the detection accuracy. Further, the number of accesses to the pixels of the disparity image of a road surface or an object at a short distance is reduced so as to increase the processing speed.

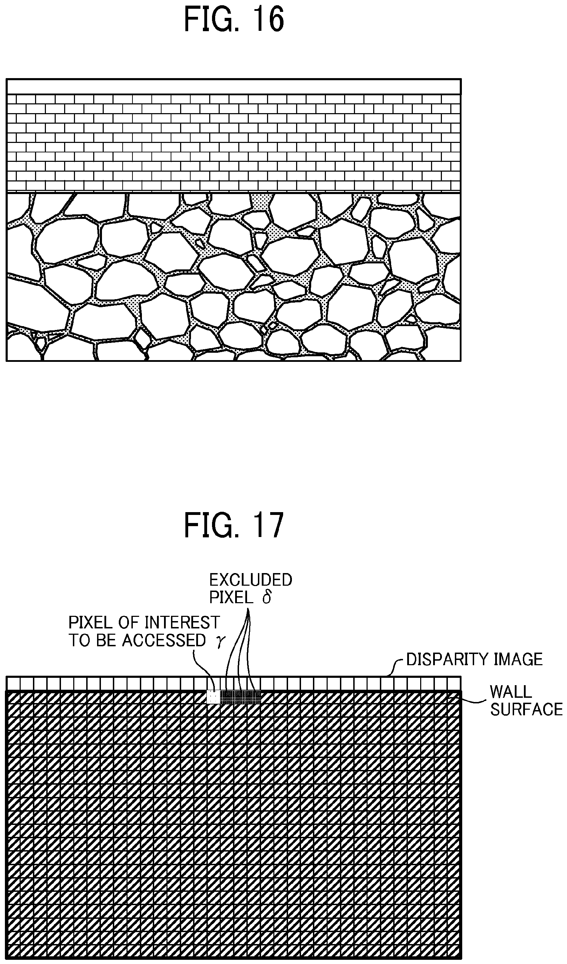

FIG. 16 is an illustration of a second example disparity image for describing the relation between the distance to the detection target and the thinning width, according to an embodiment of the present disclosure. FIG. 17 is an illustration of a second example disparity image for describing a method of setting the thinning width according to an embodiment of the present disclosure.

In FIG. 16, the wall is in the area ahead and at a short distance from the own vehicle of the driver. In such a case, the disparity value of the access pixel of interest γ is a relatively large value in the substantially entire area of the disparity image. Accordingly, the thinning width is set to a relatively large value ("3" in this example) in the substantially entire area of the disparity image.

As described above, in the present embodiment, the thinning width is determined based on the disparity value irrespective of which area the detection target is present (for example, the upper area or the lower area) in the disparity image. In such a configuration, the thinning width is variable with a change in the disparity image (an image-capturing target/an object to be captured), even within the same area. Within the same upper area for example, when the disparity value is small (when the distance to the detection target is long), the thinning width is set small, and when the disparity value is large (when the distance to the detection target is short), the thinning width is set large.

The voting-method setting unit 110322 in FIG. 13 sets the voting method based on the disparity value d of the access pixel (the access pixel of interest). As described above, the voting method is an example of the access number parameter. The voting-method setting unit 110322 according to the present embodiment sets the voting method to be performed by the voting unit 11033 to any of the all-pixel voting method, the simple thinning method, and the virtual voting method.

The method of setting the voting method is not particularly limited as long as it is selected according to the trade-off relation of desired processing speed and detection accuracy. For example, when the thinning width is greater than or equal to 1, any one of the virtual voting method and the simple thinning method is preferably selected as the voting method. In particular, when the thinning width is relatively large (for example, greater than or equal to 3), it is preferable to adopt (select) the virtual voting system.

With such a configuration, a large number of vote can be obtained even with a decrease in the number of access, and a reduction in detection accuracy can be prevented. When the thinning width is "0", the all-pixel voting method is adopted. This configuration enables the voting method to be dynamically optimized according to the disparity value (thinning width) of the access pixel of interest.

In this example, each function of the acquisition unit 1102 and the data generation unit 1103 is implemented by the CPU 31 executing the program. Alternatively, each function may be implemented by dedicated hardware circuitry, such as the FPGA 32.

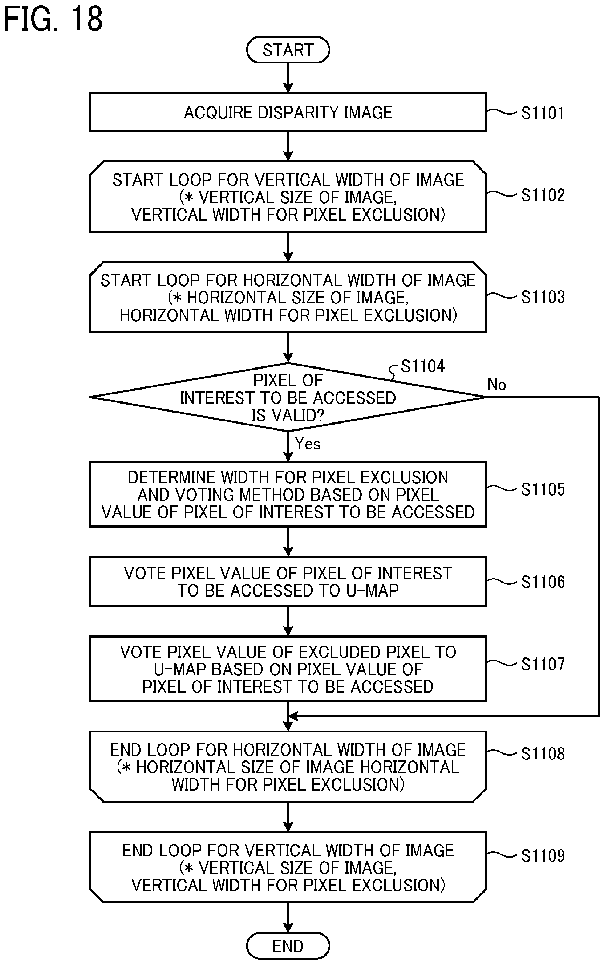

FIG. 18 is a flowchart of an example operation of the U-map generator 105 according to an embodiment of the present disclosure. In the following, the example operation of the U-map generator 105 is described. The same applies to the example operation of the V-map generator 103.

As illustrated in FIG. 18, the acquisition unit 1102 first acquires a disparity image (step S1101). Next, the data generation unit 1103 repeatedly executes the processes of steps S1103 to S1107 on each line of the disparity image acquired by the acquisition unit 1102 in step S1101 (step S1102). The data generation unit 1103 sequentially selects the lines to be processed with a predetermined vertical thinning width (vertical width for pixel exclusion).

The description "VERTICAL SIZE OF IMAGE, VERTICAL WIDTH FOR PIXEL EXCLUSION" in step S1102 of FIG. 18 indicates the start coordinates, the end coordinates, the amount of movement. The start coordinates are any desired values, which is indicated with the mark "*" in the example of FIG. 18. When the disparity image is divided into areas in the vertical direction, for example, the access pixels of the disparity image are accessed with the vertical thinning width (vertical width for pixel exclusion) set for each area.

Next, the data generation unit 1103 repeatedly executes the processes of step S1104 to step S1107 on the line selected in step S1102 (the line horizontally extending and the position in the vertical direction is any desired coordinate value y) (step S1103). The data generation unit 1103 sequentially selects the lines to be processed with a predetermined horizontal thinning width (horizontal width for pixel exclusion). The description "HORIZONTAL SIZE OF IMAGE, HORIZONTAL WIDTH FOR PIXEL EXCLUSION" in step S1102 of FIG. 18 indicates the start coordinates, the end coordinates, the amount of movement. The start coordinates are any desired coordinate values, which is indicated with the mark "*" in the example of FIG. 18. When the disparity image is divided into areas in the vertical direction, for example, the access pixels of the disparity image are accessed with the horizontal thinning width (horizontal width for pixel exclusion) set for each area.

In the following, the processes of steps S1104 to S1107 are described. In step S1104, the data generation unit 1103 determines whether the access pixel of interest (the selected access pixel) is valid.

In generating a U-map, only the pixels each having a disparity value higher than the estimated road surface does are voted on the U-map. Accordingly, the data generation unit 1103 determines whether the disparity value of the access pixel is higher than the road surface does, and whether the disparity value of the access pixel is within a predetermined appropriate range, so as to determine whether the access pixel is valid.

In generating a V-map, the data generation unit 1103 determines whether the disparity value of the access pixel is within the predetermined appropriate range without determining whether the disparity value of the access pixel is higher than the road surface does.

When the data generation unit 1103 determines that the access pixel is valid (YES in step S1104), the process proceeds to step S1105. When the data generation unit 1103 determines that the access pixel is not valid (invalid) (NO in step S1104), the process proceeds to step S1108.

In step S1105, the parameter setting unit 11032 (the thinning-width setting unit 110321 and the voting-method setting unit 110322) of the data generation unit 1103 determines the thinning width and the voting method based on the pixel value (disparity value) of the access pixel of interest (the access pixel determined to be valid). Next, in step S1106, the voting unit 11033 votes the pixel value of the access pixel of interest on the U-map.

In the example process of step S1107 in FIG. 18, the virtual voting method is set as the voting method. In step S1107, the voting unit 11033 votes the pixel value of the thinned pixel (excluded pixel) to the U-map based on the pixel value of the access pixel of interest. That is, the pixel value of the access pixel of interest is voted on the U-map as the pixel value of the thinned pixel. The process of step S1107 is not executed when the all-pixel voting method or the simple thinning method is set. In the case of the virtual voting method, as described above, voting can be performed in any of the vertical, horizontal, and diagonal directions. Further, the process may be performed only in any one direction, or may be performed in a plurality of directions.

In step S1108, the data generation unit 1103 repeats the process of step S1103 and the processes following step S1103 when there is still one or more access pixels to be processed within the line. When there is no longer access pixels to be processed within the line, the process proceeds to step S1108 to proceed to the next line.

In step S1109, after the processing of one line is completed, the data generation unit 1103 repeats the processes of step S1102 and the following steps when there is a line to be processed in the disparity image. When there are no longer lines to be processed in the disparity image, the process ends.

As described above, the configuration according to the present embodiment disclosure adjusts the access number parameter, such as the thinning width and the voting method, based on the pixel value (distance information) of the access pixel of interest. This configuration enables the controlling of the trade-off relation of the processing speed and the detection accuracy.

Another embodiments is described below with reference to the drawings. In the following description, the same reference signs are given to elements similar to those in the above-described embodiment, and their detailed description is omitted.

The following describes another embodiments of the present disclosure.

In another embodiment of the present disclosure, when the access pixel of interest is invalid, a correction unit corrects the pixel value of the invalid access pixel of interest based on the pixel value (distance information, disparity value) of the pixel that has been accessed (accessed pixel) close to the invalid access pixel of interest. The present embodiment differs from the above-described embodiment in that configuration.

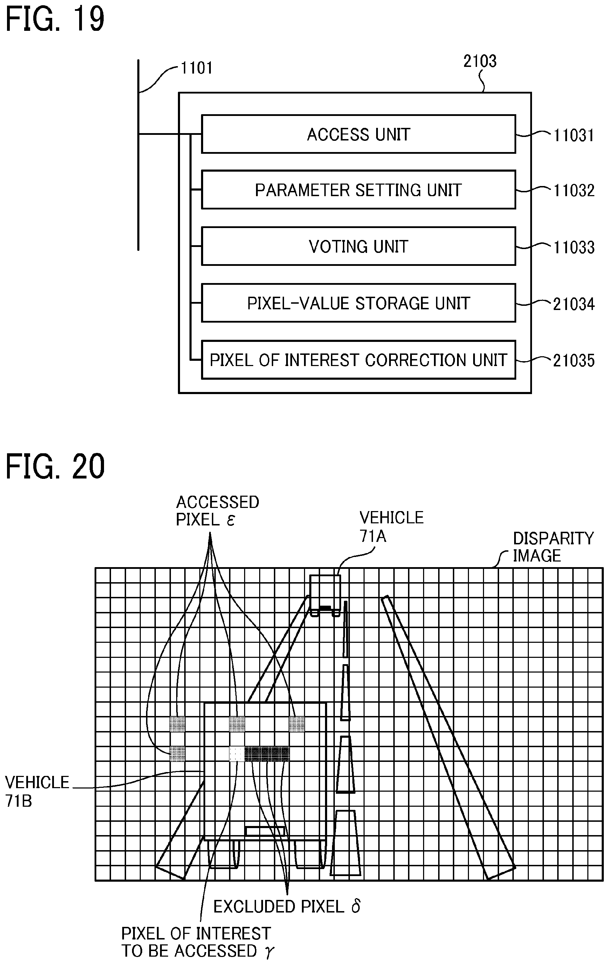

FIG. 19 is a block diagram of an example functional configuration of a data generation unit 2103 according to another embodiment of the present disclosure. The data generation unit 2103 according to an embodiment of the present disclosure includes the access unit 11031, the parameter setting unit 11032, the voting unit 11033, a pixel-value storage unit 21034, and a pixel of interest correction unit 21035. The access unit 11031, the parameter setting unit 11032, and the voting unit 11033 are the same as those in the above-described embodiment.

The pixel-value storage unit 21034 stores the disparity value acquired by the access unit 11031 accessing the pixel. In this embodiment, a pixel whose disparity value has been accessed and acquired by the access unit 11031 is referred to as an accessed pixel. The pixel-value storage unit 21034 is configured using an appropriate storage device, such as a semiconductor memory.

When the access pixel of interest is invalid, the pixel of interest correction unit 21035 corrects the disparity value of the access pixel of interest based on disparity value of the accessed pixel close to the access pixel of interest. Examples of the method of determining whether the access pixel of interest is valid may include, but not limited to, the method in which an access pixel of interest is determined to be invalid when the disparity value of the access pixel of interest is outside the predetermined valid disparity range (that has been defined beforehand) as described above.

Examples of the method of determining whether the access pixel of interest is valid may also include a method of correcting the disparity value of the access pixel of interest based on the disparity value of the accessed pixel even when the access pixel of interest is valid, so as to increase the reliability of the disparity of the access pixel of interest. The pixel of interest correction unit 21035 is implemented by the CPU 31 executing a program, but is not limited to this, and may be implemented by, for example, a dedicated hardware circuit (for example, an FPGA 32).

FIG. 20 is an illustration of an example disparity image for describing a method of correcting a disparity value of an access pixel of interest. The disparity image of FIG. 20 includes the access pixel of interest (pixel of interest to be accessed) γ that has been determined to be invalid (not valid), a thinned pixel (excluded pixel) 8 at a position downstream of the scanning direction of the access pixel of interest, and an accessed pixel ε within the predetermined range of the distance from the access pixel of interest γ.

The disparity value of the access pixel of interest (pixel of interest to be accessed) γ is corrected based on the disparity value of the accessed pixel ε. Note that the disparity value of the access pixel of interest γ may be corrected based on the disparity value of the accessed pixel even when the access pixel of interest γ is valid, so as to increase the reliability of the disparity of the access pixel of interest γ.

When the virtual voting method is set (selected) as the voting method, the corrected disparity value of the access pixel of interest γ is voted on the disparity map as the disparity value of the thinned pixel δ.

For example, the pixels constituting the disparity image are accessed starting from the upper left (the origin at the upper left), in a line along a direction from left to right. A direction between the lines is from top to down. In such a case, the pixels at the upper side and the left side of the access pixel of interest γ are accessed pixels ε whose disparity values have been acquired. The disparity value of the accessed pixel ε is stored in the pixel-value storage unit 21034. When the access pixel of interest γ is invalid, or when the access pixel of interest γ is valid but is desired to be corrected to increase the reliability of the disparity value, a correction value to be a corrected disparity value of the access pixel of interest γ is obtained using the disparity value of the accessed pixel ε stored in the pixel-value storage unit 21034.

Although the method of calculating the correction value is not particularly limited, the correction value may be, for example, any one of an average value, a weighted average value, a maximum value, a minimum value, a median value, or a frequent value of one or more disparity values of the accessed pixel ε. In some embodiments, when the accessed pixel ε is invalid, the disparity value of the invalid accessed pixel ε may be ignored.

As described above, the correction value is obtained (calculated) based on the disparity value of the accessed pixel ε present within the predetermined range of the distance from the access pixel of interest γ. Such a predetermined range is set according to the use conditions as appropriate. If the predetermined range is set large, the number of accessed pixels ε used to obtain (calculate) the correction value increases, which can increase the accuracy of the correction value, but might adversely increase the storage capacity of the pixel-value storage unit 21034 and cause the processing speed to decrease.

By contrast, if the predetermined range is set small, the number of accessed pixel ε used to obtain the correction value decreases, which can reduce the storage capacity of the pixel-value storage unit 21034 and increase the processing speed. However, the accuracy of the correction value might decrease. In view of such circumstances, the predetermined range is set based on the trade-off relation of the storage capacity/the processing speed and the accuracy of the correction value.

When the thinning width is large, the number of access pixels decreases. Under such circumstances, if a mishit of the access pixel of interest γ occurs (for example, a disparity value outside the valid disparity range is obtained), the accuracy of detection of a road surface and an object decreases. Such a mishit is more likely to occur under the circumstances difficult in detecting an object at a long distance, in the nighttime, in a rainy weather, water pools, and in the backlight.

In order to increase the detection accuracy under such circumstances and when the thinning width is large, the disparity value of the access pixel of interest γ is corrected based on the disparity value of the accessed pixel ε.

In some embodiments, whether such a correction process is performed may be determined based on predetermined conditions. For example, the disparity image may be divided into a plurality of areas (for example, the upper area and the lower area) of a predetermined size, and a determination may be made whether the correction process is performed on each area.

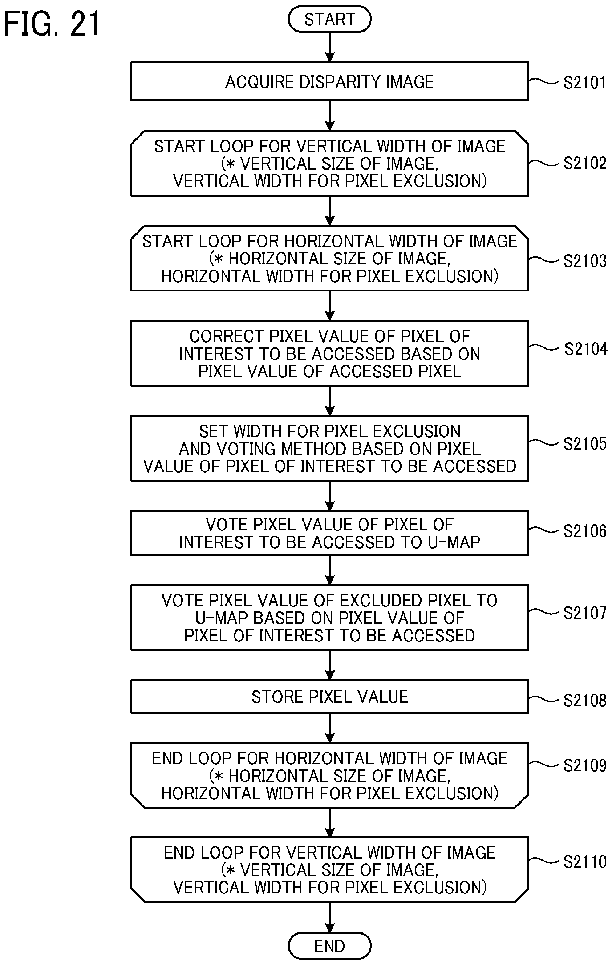

FIG. 21 is a flowchart of an example operation of the U-map generator 105 according to another embodiment of the present disclosure. In the following, the example operation of the U-map generator 105 is described. The same applies to the example operation of the V-map generator 103.

As illustrated in FIG. 21, the acquisition unit 1102 acquires a disparity image (step S2101). Next, the data generation unit 2103 repeatedly executes the processes of steps S2103 to S2108 on each line of the disparity image acquired by the acquisition unit 1102 in step S2101 (step S2102). The data generation unit 2103 sequentially selects the lines to be processed with a predetermined vertical thinning width (vertical width for pixel exclusion).

The description "VERTICAL SIZE OF IMAGE, VERTICAL WIDTH FOR PIXEL EXCLUSION" in step S2102 of FIG. 21 indicates the start coordinates, the end coordinates, the amount of movement. The start coordinates are any desired coordinate values, which is indicated with the mark "*" in the example of FIG. 21. When the disparity image is divided in to areas along the vertical direction, for example, the access pixels of the disparity image are accessed with the vertical thinning width (vertical width for pixel exclusion) set for each area.

Next, the data generation unit 2103 repeatedly executes the processes of step S2104 to step S2108 on the line selected in step S2102 (the line horizontally extending and the position in the vertical direction is any desired coordinate value y) (step S2103). The data generation unit 2103 sequentially selects the lines to be processed with a predetermined horizontal thinning width (horizontal width for pixel exclusion).

The description "HORIZONTAL SIZE OF IMAGE, HORIZONTAL WIDTH FOR PIXEL EXCLUSION" in step S2103 of FIG. 21 indicates the start coordinates, the end coordinates, the amount of movement. The start coordinates are any desired coordinate values, which is indicated with the mark "*" in the example of FIG. 21. When the disparity image is divided into areas in the vertical direction, for example, the access pixels of the disparity image are accessed with the horizontal thinning width (horizontal width for pixel exclusion) set for each area.

In the following, the processes of steps S2104 to S2108 are described. In step S2104, the data generation unit 2103 corrects the pixel value of the access pixel of interest based on the pixel value (disparity value) of the accessed pixel. In the correction process of step S2104, only the invalid access pixel of interest (determined to be not valid) may be corrected, or even the valid access pixel of interest (determined to be valid) may also be corrected to increase the reliability of the disparity value of the access pixel of interest.

In step S2105, the parameter setting unit 11032 (the thinning-width setting unit 110321 and the voting-method setting unit 110322) of the data generation unit 2103 determines the thinning width and the voting method based on the corrected pixel value (disparity value) of the access pixel of interest. Next, in step S2106, the voting unit 11033 votes the corrected pixel value of the access pixel of interest on the U-map.

In the example process of step S2107 in FIG. 21, the virtual voting method is set as the voting method. In step S2107, the voting unit 11033 votes the pixel value of the thinned pixel (excluded pixel) to the U-map based on the corrected pixel value of the access pixel of interest.

That is, the corrected pixel value of the access pixel of interest is voted on the U-map as the pixel value of the thinned pixel. The process of step S2107 is not executed when the all-pixel voting method or the simple thinning method is set.

In the case of the virtual voting method, as described above, voting can be performed in any of the vertical, horizontal, and diagonal directions. Further, the process may be performed only in any one direction, or may be performed in a plurality of directions.

Next, in step S2108, the pixel value (including the corrected pixel value) of the access pixel is stored in the pixel value storage unit 214034.

In step S2109, the data generation unit 2103 repeats the process of step S2103 and the processes following step S2103 when there is still one or more access pixels to be processed within the line. When there is no longer access pixels to be processed within the line, the process proceeds to step S2110 to proceed to the next line.

In step S2110, after the processing of one line is completed, the data generation unit 2103 repeats the processes of step S2102 and the following steps when there is a line to be processed in the disparity image. When there are no longer lines to be processed in the disparity image, the process ends.

As described above, the configuration according to an embodiment of the present disclosure adjusts the access number parameter, such as the thinning width and the voting method, based on the pixel value (distance information) of the access pixel of interest. Further, the configuration according to an embodiment of the present disclosure corrects the pixel value of the access pixel of interest based on the pixel value of the accessed pixel. This configuration corrects invalid values of the access pixel of interest to valid values, which enables the controlling of the trade-off relation of the processing speed and the detection accuracy, and which also increases the detection accuracy.

Although the embodiments of the present disclosure have been described above, the embodiments have been presented as examples, and are not intended to limit the scope of the invention. Numerous additional modifications, variations are possible in light of the above teachings. It is therefore to be understood that within the scope of the appended claims, the embodiments and variations may be practiced otherwise than as specifically described herein. For example, elements and/or features of different illustrative embodiments may be combined with each other and/or substituted for each other within the scope of this disclosure and appended claims.

The program executed by the device control system 1 according to the above-described embodiment and variation may be installed for distribution in any desired computer-readable recording medium such as a compact disc, a read-only memory (CD-ROM), a flexible disk (FD), a compact disc-recordable (CD-R), and a digital versatile disk (DVD), a universal serial bus (USB) in a file format installable or executable by a computer, or may be provided or distributed via network such as Internet. Alternatively, various kinds of programs may be integrated in advance, for example, into a ROM inside the device for distribution.

According the embodiments of the present disclosure, a carrier means carrying computer readable code for controlling a computer to carry out the above-described.

The present invention can be implemented in any convenient form, for example using dedicated hardware, or a mixture of dedicated hardware and software. The present invention may be implemented as computer software implemented by one or more networked processing apparatuses. The processing apparatuses can include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can include a transient carrier medium such as an electrical, optical, microwave, acoustic or radio frequency signal carrying the computer code. An example of such a transient medium is a TCP/IP signal carrying computer code over an IP network, such as the Internet. The carrier medium can also include a storage medium for storing processor readable code such as a floppy disk, hard disk, CD ROM, magnetic tape device or solid state memory device.

Although the embodiments of the present disclosure have been described above, the present disclosure is not limited to the embodiments described above, but a variety of modifications can naturally be made within the scope of the present disclosure. Numerous additional modifications and variations are possible in light of the above teachings. It is therefore to be understood that within the scope of the appended claims, the embodiments may be practiced otherwise than as specifically described herein. For example, elements and/or features of different illustrative embodiments may be combined with each other and/or substituted for each other within the scope of this disclosure and appended claims.

## Claims

1. An information processing apparatus (13) comprising:
an acquisition unit (1102) to acquire a distance image; and
a data generation unit (1103) to access the distance image to acquire distance information, and generate data based on the acquired distance information,
wherein the data generation unit (1103) is configured to access at least one pixel of the distance image to acquire distance information of the accessed at least one pixel, and set a parameter for determining a number of access to the distance image based on a distance indicated by the acquired distance information of the accessed at least one pixel, such that the number of access to the distance image increases as the distance increases, and the number of access to the distance image decreases as the distance decreases.

2. The information processing apparatus (13) according to claim 1, wherein
the data generation unit (1103) is configured to exclude one or more pixels from an access target in the distance image and access the at least one pixel other than the excluded one or more pixels, and
the parameter is a thinning width indicating the number of pixels to be excluded from the access target.

3. The information processing apparatus (13) according to claim 1 or 2, wherein
the data generation unit (1103) is configured to vote the acquired distance information on a map to generate data, and
the parameter further determines a voting method indicating a method of voting the distance information on the map.

4. The information processing apparatus (13) according to claim 3, wherein
the voting method is at least one of:
an all-pixel voting method to vote distance information acquired from each pixel of disparity information on the map;
a simple thinning method to vote, on the map, distance information acquired from access pixels that have been accessed by the data generation unit (1103); and
a virtual voting method to vote, on the map, the distance information acquired from the access pixels as distance information of non-access pixels that have not been accessed by the data generation unit (1103).

5. The information processing apparatus (13) according to any one of claims 1 to 4, wherein
the data generation unit (1103) is configured to determine whether the acquired distance information is valid, and set the parameter based on distance information determined to be valid.

6. The information processing apparatus (13) according to any one of claim 1 to 5, wherein
the data generation unit (1103) is configured to correct the distance information of a pixel of interest based on distance information of a pixel that has been accessed within a range of a distance from the pixel of interest.

7. The information processing apparatus (13) according to claim 6, wherein
the data generation unit (1103) is configured to correct the distance information of the pixel of interest based on any one of an average value, a weighted average value, a maximum value, a minimum value, a median value, or a frequent value of the distance information of the accessed pixel.

8. The information processing apparatus (13) according to any one of claims 1 to 7, wherein
data generated by the data generation unit (1103) is one of a first map indicating a relation of a position in a vertical direction of the distance image and a distance to an object, and a second map indicating a relation of a position in a horizontal direction of the distance image and a height from a road surface.

9. The information processing apparatus (13) according to any one of claims 1 to 8, wherein
the distance information is disparity information.

10. A system (1) comprising:
the information processing apparatus (13) according to any one of claims 1 to 9; and
a controller (51) configured to control a vehicle equipped with the information processing apparatus (13), based on information processing results of the information processing apparatus (13).

11. A mobile object (10) comprising:
the information processing apparatus (13) according to any one of claims 1 to 9; and
a controller (51) configured to control a vehicle equipped with the information processing apparatus (13), based on information processing results of the information processing apparatus (13).

12. An information processing method, comprising:
acquiring a distance image (S1101);
generating data based on distance information acquired by accessing the distance image,
wherein the generating step includes:
accessing at least one pixel of the distance image to acquire distance information of the accessed at least one pixel (S1102); and
setting a parameter for determining a number of access to the distance image based on a distance indicated by the acquired distance information of the accessed at least one pixel (S1102), such that the number of access to the distance image increases as the distance increases, and the number of access to the distance image decreases as the distance decreases.

13. A carrier means carrying computer readable code for controlling a computer system to carry out the method according to claim 12.
